(19)

Europäisches
Patentamt
European
Patent Office
Office européen
des brevets

(11) **EP 3 671 316 A1**

(12) **DEMANDE DE BREVET EUROPEEN**

(43) Date de publication:
**24.06.2020 Bulletin 2020/26**

(51) Int Cl.:
***G02B 27/01*** *(2006.01)*       ***G02C 5/12*** *(2006.01)*
***B63C 11/12*** *(2006.01)*

(21) Numéro de dépôt: **19218879.5**

(22) Date de dépôt: **20.12.2019**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **21.12.2018 FR 1874001**

(71) Demandeurs:
• **Perrin-Licini, Benjamin**
**59800 Lille (FR)**

• **Baraffe, Nathalie**
**39220 Premanon (FR)**

(72) Inventeurs:
• **PERRIN-LICINI, Benjamin**
**59800 Lille (FR)**
• **BARAFFE, Eric**
**39220 Premanon (FR)**

(74) Mandataire: **Croonenbroek, Thomas Jakob et al
Innovincia
11, avenue des Tilleuls
74200 Thonon-les-Bains (FR)**

(54) **DISPOSITIF OPTIQUE COMPORTANT UN DISPOSITIF D'AFFICHAGE D'IMAGES OU DE DONNÉES**

(57) L'invention se rapporte à un dispositif optique (200, 300) comportant un dispositif d'affichage (100) d'image ou de données, le dispositif optique (200, 300) comportant :
un cadre support (3) configuré pour permettre le port du dispositif optique (200, 300) sur la tête de l'utilisateur, ledit cadre support (3) comportant au moins une portion latérale (34), destinée à se trouver au niveau de la tempe d'un utilisateur lors du port du dispositif optique (200, 300), et une portion centrale (36), disposée de sorte à être au niveau du nez de l'utilisateur lors du port du dispositif optique (200, 300),
caractérisé en ce qu'il comporte :
un générateur d'images (5), porté par la portion latérale (34) du cadre support (3), configuré pour générer une image (Im),
un réflecteur (7), porté par la portion centrale (36) du cadre support (3), disposé et orienté pour réfléchir l'image (Im) générée par le générateur d'images (5) vers un œil de l'utilisateur (U) de façon à former une image virtuelle (Im).

[Fig. 1]

Fig. 1

EP 3 671 316 A1

**Description**

La présente invention concerne un dispositif optique tel que des lunettes ou un masque, comportant un dispositif d'affichage de type affichage tête haute pour l'affichage d'images et/ou de données telles que l'heure, la température, l'altitude etc. En particulier, l'afficheur est destiné à une utilisation avec des lunettes de sports aériens tels que le parachute, le deltaplane, le parapente ou des masques de sport d'hiver ou de plongée.

On connaît des affichages tête haute, abrégé "ATH", reposant sur la création d'une image virtuelle sur une vitre semi-réfléchissante, permettant d'afficher des données dans le champ de vision d'un utilisateur.

Lesdits affichages comportent en conséquence généralement un générateur d'image, sous forme d'écran semi-transparent, de projecteur, ou d'écran à cristaux liquides ou LED. Ledit générateur génère une image optique, soit réelle soit virtuelle, qui est ensuite adaptée par passage dans des lentilles ou des réflecteurs courbes.

L'image virtuelle obtenue est alors projetée sur un support transparent semi-réfléchissant, situé dans le champ de vision attendu de l'utilisateur. L'image virtuelle est idéalement collimatée, apparaissant à l'infini optique. Ceci permet à l'utilisateur de lire les données affichées sans changer la focalisation : ces données apparaissent intégrées dans le panorama.

Dans le domaine automobile, des affichages tête haute sont utilisés par exemple pour afficher la vitesse du véhicule, des consignes d'assistant de navigation, l'heure actuelle ou d'arrivée etc.

Dans le domaine aéronautique, les pilotes d'avions et d'hélicoptères ont des casques ayant une vitre dédiée permettant l'affichage de données telles que l'horizon artificiel, la vitesse, l'altitude, le verrouillage de cible etc. Certains cockpits d'aéronef ont aussi une vitre (un "combineur") dédiée à l'affichage tête haute.

Dans le cas des sports aériens tels que le parapente, le deltaplane ou le parachute, il n'y a pas d'habitacle, cockpit ou autre surface sur laquelle des données peuvent être affichées sous forme d'image virtuelle reflétée. En effet, dans le cadre support de la recherche de sensations, les pilotes de vol libre préfèrent généralement un équipement léger et ouvert permettant d'éprouver pleinement les sensations de vol.

En particulier, les pilotes de vol libres n'utilisent généralement qu'une paire de lunettes, de vue ou de soleil, de format sensiblement identique à celui des lunettes de vue ou de sport.

Le brevet US 4,806,011 par exemple, divulgue un dispositif de type lunettes ayant la capacité d'afficher des données telles que l'heure, la date etc. Le dispositif divulgué est en particulier configuré pour afficher des données à une position fixe dans le champ de vision de l'utilisateur, par exemple en périphérie.

Le rayonnement issu d'un générateur d'image est réfléchi par un réflecteur, porté par un bras déformable, en direction d'un des verres des lunettes. Au niveau des verres, une portion de la lumière incidente est réfléchie en direction de l'œil de l'utilisateur par réflexion partielle.

Il découle de cette architecture que les éléments optiques utilisés (réflecteur, lentilles etc.) et leur position doivent être changés selon la forme et la focale des verres. En outre, l'étape de réflexion partielle sur les verres cause une perte d'efficacité potentiellement importante. La réflexion sur les verres entraîne aussi la nécessité d'un revêtement adapté sur les verres.

Le réflecteur situé au bout d'un bras dudit document représente aussi un danger supplémentaire pour le pilote en cas de chute ou d'accident, en ce que le bras peut causer des blessures au visage ou à l'œil.

Afin de résoudre au moins partiellement le problème précédemment mentionné, l'invention a pour objet un dispositif optique comportant un dispositif d'affichage d'image ou de données, le dispositif optique comportant :

-    un cadre support configuré pour permettre le port du dispositif optique sur la tête de l'utilisateur, ledit cadre support comportant au moins une portion latérale, destinée à se trouver au niveau de la tempe d'un utilisateur lors du port du dispositif optique, et une portion centrale, disposée de sorte à être au niveau du nez de l'utilisateur lors du port du dispositif optique,

caractérisé en ce qu'il comporte :

-    un générateur d'images, porté par la portion latérale du cadre support, configuré pour générer une image,

-    un réflecteur, porté par le cadre support ou une lentille ophtalmique portée par le cadre support, disposé et orienté pour réfléchir l'image générée par le générateur d'images vers un œil de l'utilisateur de façon à former une image virtuelle,

Le dispositif optique ainsi obtenu permet de générer une image virtuelle en périphérie du champ de vision d'un utilisateur, par exemple un pilote d'aéronef de vol libre, de façon indépendante des verres ou de la vue de l'utilisateur.

Le dispositif optique peut alors présenter une ou plusieurs des caractéristiques suivantes, prises seules ou en combinaison.

Le réflecteur est par exemple porté par la portion centrale du cadre support.

Si la portion centrale du cadre support comporte un pont nasal, configuré pour être disposé sur l'arête ou la racine du nez de l'utilisateur, le réflecteur peut être un miroir concave, notamment parabolique porté par le pont nasal.

Le réflecteur peut aussi être fixé sur la lentille ophtalmique.

Le réflecteur est par exemple un miroir concave parabolique ou sphérique.

Le générateur d'images peut comporter au moins un des éléments suivants : un écran réflectif, un écran transflectif, un écran à cristaux liquides, un écran à cristaux liquides sur puce, une puce de traitement de la lumière, un écran à diodes organiques, un projecteur laser.

Le générateur d'images et le réflecteur peuvent être configurés et disposés de sorte que l'image virtuelle générée apparaît à une distance supérieure à 2m.

Le dispositif d'affichage peut comporter en outre un module de communication, configuré pour communiquer avec une station de mesure, le dispositif d'affichage étant configuré pour adapter l'image virtuelle à des données évaluées par la station de mesure.

Le dispositif d'affichage peut être configuré pour afficher au moins une des données suivantes : la direction et/ou de la force du vent, l'altitude, la température, la vitesse absolue et/ou relative, des coordonnées de latitude et/ou de longitude, une boussole, un message sms.

Le dispositif d'affichage peut comporter un module de mesure comportant au moins un des éléments suivants : un anémomètre, un baromètre, une station GPS, un altimètre, une boussole, un récepteur SMS.

L'invention concerne également des lunettes, en particulier de sport, formant un dispositif optique tel que défini ci-dessus avec

- un cadre support configuré pour permettre le port des lunettes sur la tête de l'utilisateur, ledit cadre support comportant au moins une portion latérale, destinée à se trouver au niveau de la tempe d'un utilisateur lors du port des lunettes, et une portion centrale, disposée de sorte à être au niveau du nez de l'utilisateur lors du port des lunettes,

- un générateur d'images, porté par la portion latérale du cadre support, configuré pour générer une image, un réflecteur porté par le cadre support ou une lunette ophtalmique, et disposé et orienté pour réfléchir l'image générée par le générateur d'images vers un œil de l'utilisateur de façon à former une image virtuelle.

Le générateur d'images peut alors être disposé dans une branche du cadre support des lunettes.

L'invention concerne également un masque, en particulier de plongée ou de sport de glisse, formant un dispositif optique tel que défini ci-dessus avec

- un cadre support configuré pour permettre le port du masque sur la tête de l'utilisateur, ledit cadre support comportant au moins une portion latérale, destinée à se trouver au niveau de la tempe d'un utilisateur lors du port du masque,

- un générateur d'images, porté par la portion latérale du cadre support, configuré pour générer une image,

- un réflecteur, porté le cadre support ou le verre du masque, disposé et orienté pour réfléchir l'image générée par le générateur d'images vers un œil de l'utilisateur de façon à former une image virtuelle.

D'autres caractéristiques et avantages de l'invention apparaîtront plus clairement à la lecture de la description suivante, donnée à titre d'exemple illustratif et non limitatif, et des dessins annexés parmi lesquels :

[Fig. 1] montre schématiquement un dispositif d'affichage intégré dans des lunettes de sport aérien en vue de côté,

[Fig. 2] montre schématiquement les lunettes et le dispositif de la figure 1 en vue de dessus,

[Fig. 3] est une représentation schématique du dispositif d'affichage illustrant son fonctionnement,

[Fig. 4] est une représentation schématique du dispositif d'affichage illustrant la position relative de différents éléments dudit dispositif,

[Fig. 5] est une représentation schématique d'une portion du dispositif selon un mode de réalisation alternatif,

[Fig. 6] est une représentation schématique d'un masque de sports d'hiver ou de plongée comportant un dispositif d'affichage selon l'invention.

Les réalisations décrites en faisant référence aux figures sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres modes de réalisation.

Les termes tels que "premier" et "deuxième" utilisés plus bas sont donnés pour un simple référencement sans indiquer de préférence ou d'ordre de montage particulier.

Un certain nombre de qualificatifs de position tels que "au-dessus" ou "au-dessous", etc. sont aussi utilisés en lien avec les figures. Ces qualificatifs sont définis à partir des figures, mais la disposition finale des éléments peut être différente vis-à-vis de la gravité.

Des qualificatifs tels que devant, derrière et équivalents sont utilisés pour repérer certains éléments. Ces qualificatifs sont définis en considérant, pour des lunettes ou un masque, que le côté du ou des verres 1a, 1b où se trouve l'utilisateur est le côté arrière, et que le côté du ou des verres où se trouvent les objets observés est le côté avant.

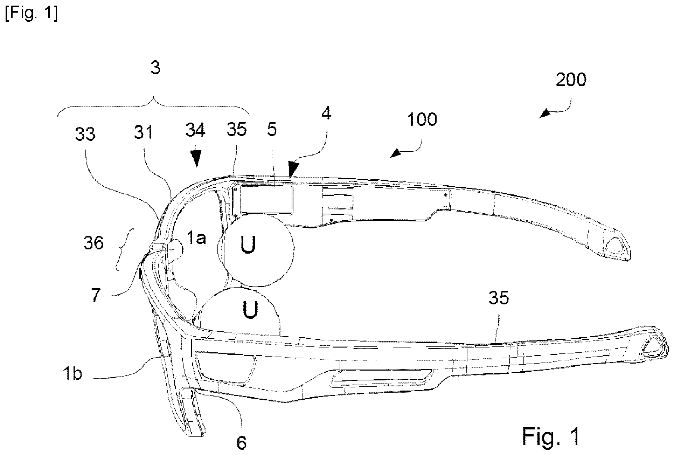

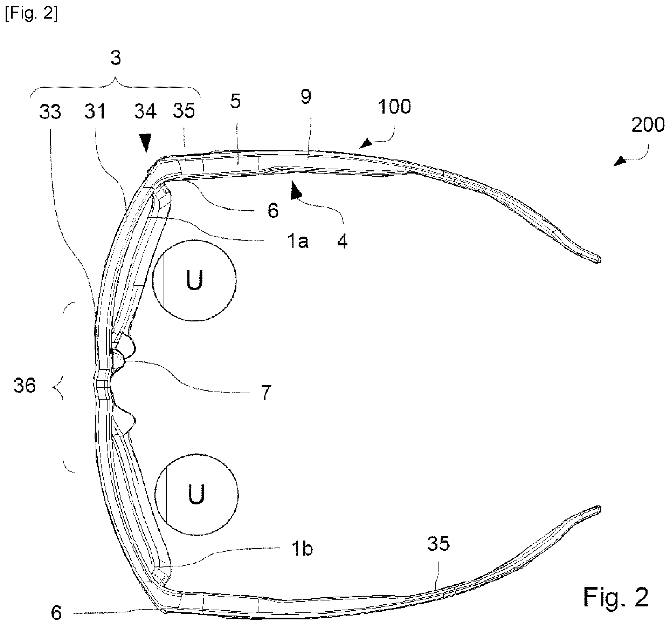

La figure 1 représente schématiquement un dispositif optique, ici sous forme de lunettes 200, comportant un dispositif d'affichage 100 selon un mode de réalisation de l'invention, en vue de côté. La figure 2 représente lesdites lunettes 200 en vue de dessus.

Le dispositif d'affichage 100 est intégré dans des lunettes 200, en particulier pour sports aériens, avec un premier et un deuxième verre optique ou lentille ophtalmique 1a, 1b, destinés à se trouver respectivement face à un œil de l'utilisateur U. Les verres optiques ou lentilles ophtalmiques 1a, 1b sont par exemple des verres correcteurs ou non, des verres plans ou courbes, des verres blancs ou bien des verres teintés, photochromatiques, polarisés, et/ou électrochromatiques.

Les verres optiques 1a, 1b sont attachés à un cadre support 3, formé par une monture 31 barrant, à l'état porté, une partie du front de l'utilisateur. La monture 31 comporte au niveau de sa portion centrale 36 un pont nasal 33, et présente des branches 35 attachées ou articulées aux extrémités latérales 34 de ladite monture 31.

La portion centrale 36 de la monture 31 est de sorte à se trouver, lorsque les lunettes 200 sont portées, au niveau du nez de l'utilisateur. En particulier, le pont nasal 33 est configuré pour être posé sur la racine ou l'arête du nez de l'utilisateur, dont seuls les yeux U sont représentés schématiquement. Les branches 35 sont notamment articulées par rapport à la monture 33, et sont destinées à être posées sur les oreilles de l'utilisateur.

L'une des branches 35 comporte un logement 4 ou emplacement, dans une portion latérale du cadre support 3 des lunettes 200, à proximité d'articulations 6 situées à l'extrémité de la portion latérale 34 associée.

Ce logement 4 se situe au niveau de la tempe de l'utilisateur lors du port du dispositif d'affichage 100. Dans ledit logement 4 est disposé un générateur d'images 5, par exemple un écran réflectif, un écran transflectif, un écran à cristaux liquides, un écran à cristaux liquides sur puce, une puce de traitement de la lumière, un écran à diodes organiques, un projecteur laser.

Au niveau dudit logement 4, les branches 35 sont élargies, avec une hauteur de l'ordre de quelques dizaines de millimètres, typiquement de 15 à 30mm. Le logement est notamment long de plusieurs dizaines de millimètres, typiquement de 20 à 60mm, pour un écran d'une longueur de 5 à 45mm.

Le générateur d'images 5 comporte un écran tourné vers une direction médiale (vers l'intérieur de la branche 35), typiquement avec une résolution de quelques centaines de pixels de côté, qui affiche une ou plusieurs images prédéterminées. Ces images peuvent par exemple contenir des données telles qu'une température, des coordonnées, l'heure etc. utiles à l'utilisateur.

En alternative, le générateur d'images 5 peut être clipsé (attache par coopération de forme), vissé ou collé à la branche 35.

Pour générer une image virtuelle de l'image réelle générée par générateur d'images 5, le dispositif d'affichage 100 comporte en outre un réflecteur 7, porté par exemple par la portion centrale 36, et ici en particulier par le pont nasal 33. Ce réflecteur 7 est disposé en biais par rapport au générateur d'images 5.

Dans des modes de réalisation alternatifs, le réflecteur 7 est porté par d'autres éléments de la portion centrale 36, par exemple un montant vertical de cadre des verres 1a, 1b, ou bien la portion horizontale de la monture 31, voire dans le coin médial d'un verre 1a, 1b.

De façon plus générale, le réflecteur 7 peut être porté par le cadre de support 3, ceci par une portion moins centrale , mais aussi par une des lentilles ophtalmiques 1a ou 1b ou il peut être fixé par collage ou par vissage dans un tour ménagé à cet effet dans la lentille ophtalmique 1a ou 1b.

Ledit réflecteur 7 se présente par exemple sous forme de miroir concave, par exemple plus spécifiquement concave parabolique, disposé du même côté des lunettes 200 que le générateur d'images 5. Ledit miroir concave présente notamment un diamètre / une dimension transversale allant de quelques millimètres à 15mm.

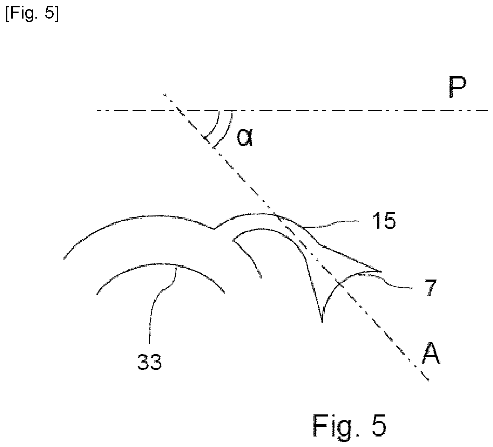

Le réflecteur 7 est par exemple obtenu par moulage ou creusage et polissage du matériau du pont nasal 33, puis dépôt ou collage d'une couche de matériau réfléchissant dans le creux obtenu. Selon d'autres alternatives (voir figure 5), il est porté par un bras, une rotule ou un système magnétique, notamment un bras inclinable. Du fait de la position du réflecteur 7 et du générateur d'images 5 on réduit le risque de blessure oculaire en cas de chute ou collision lors du port des lunettes 200.

Le réflecteur 7 est configuré, par sa forme en particulier concave et notamment concave parabolique ou sphérique, son orientation et sa position relative au générateur d'images 5 pour recevoir une partie de la lumière émise par l'écran dudit générateur d'images 5 et la renvoyer en direction de l'œil de l'utilisateur U, directement et sans interposer d'autres éléments optiques sur le trajet des rayons lumineux. A titre d'exemple, un réflecteur parabolique concave peut être utilisé pour limiter les aberrations.

Le générateur d'images 5 peut cependant comporter des éléments optiques tels que des lentilles, des diaphragmes, des filtres etc. pour l'adaptation de l'image en amont du réflecteur 7.

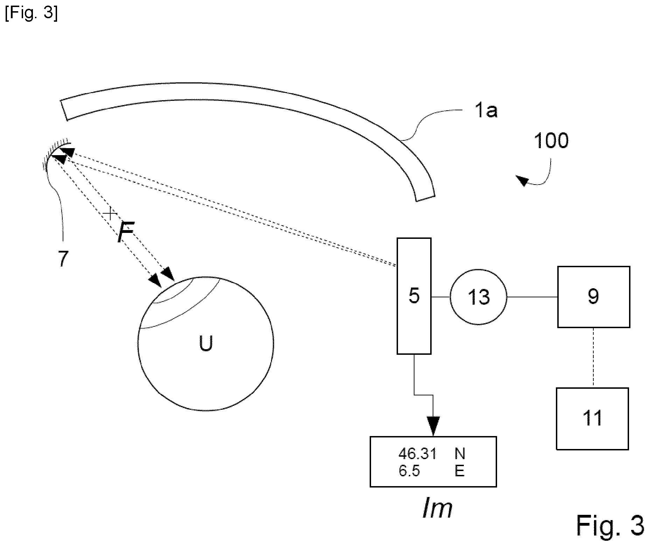

La figure 3 est une représentation schématique d'un dispositif d'affichage 100, et du cheminement des rayons lumineux formant l'image virtuelle Im à partir d'un écran du générateur d'images 5. Ledit générateur d'images 5, est disposé comme précédemment mentionné dans une des branches 35 (non représentées pour clarté).

L'image Im est générée sur l'écran du générateur d'images 5 dont une portion de la lumière atteint le réflecteur 7. Le faisceau lumineux incident sur le réflecteur 7 est réfléchi partiellement en direction de l'œil de l'utilisateur U. L'image virtuelle générée apparaît, du fait de la concavité du réflecteur 7, plus grande et plus éloignée que l'image générée par le générateur d'images 5.

Deux rayons sont représentés en figure 3 par une ligne pointillée. Ces rayons sont émis à partir du générateur d'images 5. Ils sont réfléchis par le réflecteur 7 en direction de l'œil de l'utilisateur U sous forme d'image virtuelle.

En particulier, les rayons lumineux n'interagissent pas avec le verre 1a, qui peut être conçu, teinté, échangé ou déplacé sans incidence sur le dispositif d'affichage 100. En effet, l'effet correcteur des verres ou bien leur courbure n'aura aucune incidence sur l'image virtuelle Im.

Par ailleurs, du fait qu'il s'agit d'une image virtuelle, celle-ci est visible pour l'utilisateur avec une bonne précision indépendamment des éventuelles pathologies de l'œil de l'utilisateur pour la vision de près ou de loin comme la presbytie ou la myopie.

L'image virtuelle Im est ainsi générée au niveau du réflecteur 7 en périphérie du champ de vision de l'utilisateur, qui peut, en dirigeant son regard vers le réflecteur 7, sélectivement regarder ou non l'image, tandis que la majeure partie de son champ de vision vers l'avant est préservée. Le fait d'avoir un réflecteur 7 proche de l'œil permet de faire disparaitre ce dernier du champ frontal de vision.

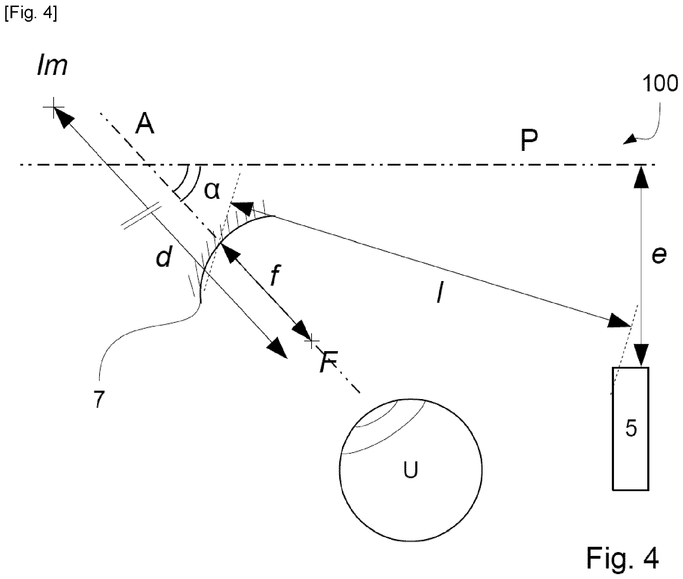

La figure 4 est une représentation du dispositif d'affichage 100 analogue à celle de la figure 3, illustrant la position relative des différents éléments.

Le générateur d'images 5 est en retrait d'un plan moyen P des verres d'un écart e de 0 à 35mm. Le plan moyen P, lorsque les lunettes 200 sont portées, est sensiblement parallèle à un plan frontal ou coronal de l'utilisateur, et situé à quelques millimètres ou centimètres des yeux de l'utilisateur U.

Pour permettre une réflexion directe dans l'œil de l'utilisateur U, le réflecteur 7 est disposé avec un axe optique A formant un angle $\alpha$ par rapport au plan moyen P des verres 1a, 1b orienté vers l'arrière et compris entre 0 et 90°, en particulier entre 20 et 40°. Le foyer F du réflecteur 7 est en conséquence situé derrière le réflecteur 7, du même côté que l'œil de l'utilisateur U.

Dans le cadre support d'une utilisation pour le pilotage d'un aéronef de vol libre, l'utilisateur est généralement en train de regarder des objets lointains, de sorte que la focalisation de son œil est à (ou proche de) l'infini optique. En conséquence, le générateur d'images 5 et le réflecteur 7 sont avantageusement formés et disposés de sorte à ce que l'image virtuelle Im générée est collimatée ou peu divergente, apparaissant ainsi à l'infini optique ou proche de celui-ci.

En partant d'un écran plan pour le générateur d'images 5, la distance apparente d de l'image Im par rapport au foyer F du réflecteur 7, la distance focale f du réflecteur 7 et la distance l entre le réflecteur 7 et le pixel considéré du générateur d'images 5 (plus simplement l est la distance entre le générateur d'images 5 et le réflecteur) sont reliées par l'équation 1/d = 1/l - 1/f, avec bien entendu f < 0 selon la convention pour un réflecteur 7 concave

En conséquence

$$d = \frac{l*f}{f-l}$$

Pour obtenir une image virtuelle, la focale vérifie la relation $\|f\| \geq l$.

A titre d'exemple, pour une image virtuelle par exemple à 0,6m, la focale du réflecteur 7 est égale à f=-0.054m Pour obtenir une image à l'infinie $\|f\| = l$.

Avantageusement, le générateur d'images 5 et le réflecteur 7 sont configurés et disposés de sorte que l'image Im apparaît à une distance supérieure à 0,6m, notamment 2m voir l'infini, pour éviter des accommodations potentiellement fatigantes pour l'œil de l'utilisateur U.

L'utilisateur peut alors percevoir ladite image Im pendant qu'il est en train de piloter en regardant au loin, sans besoin d'accommoder sa vision chaque fois qu'il souhaite par exemple lire une indication portée par l'image Im.

Le dispositif d'affichage 100 comporte aussi, en complément ou en alternative un module de communication 9, par exemple une antenne wifi ou Bluetooth, qui met en relation le générateur d'images 5 et une station de mesure 11 (voir figure 3).

La station de mesure 11 peut notamment comporter un ensemble de capteurs tels qu'un anémomètre, un baromètre, une station GPS, un altimètre, une boussole, etc. La station de mesure 11 peut par exemple se présenter comme un boîtier séparé, que l'utilisateur embarque dans un sac à dos, une poche ou attache à l'aéronef. Ladite station de mesure 11 peut alors notamment comporter un anémomètre, un baromètre, une station GPS, un altimètre. On peut ainsi recourir à des capteurs plus volumineux et nombreux que ce que la branche 35 du cadre support 3 des lunettes peut accueillir.

En complément ou en alternative, la station de mesure 11 est reliée à ou intégrée dans un téléphone portable, notamment de type smartphone, ou bien un terminal portable dédié. Le téléphone ou le terminal portable peut soit comporter des capteurs intégrés, soit interroger des stations éloignées, notamment des stations météorologiques fixes.

La station de mesure 11, surtout si elle est intégrée à un téléphone, peut comporter un récepteur SMS, l'image Im pouvant alors être utilisée pour permettre la lecture d'un SMS reçu en affichant son contenu.

Les valeurs et paramètres issues des capteurs de la station de mesure 11 peuvent servir à établir un contenu de l'image Im.

Le dispositif d'affichage 100 comprend notamment une unité de contrôle 13, représentée en figure 3. L'unité de contrôle 13 comporte des moyens de calcul et une mémoire électronique.

Ces moyens de calcul et la mémoire électronique peuvent soit être dédiés et incorporés dans la branche 35 portant le générateur d'images 5, soit être partagés et séparés (en étant par exemple déportés dans un téléphone ou terminal portable). L'unité de contrôle 13 peut en particulier être située dans la station de mesure 11, auquel cas le module de communication 9 communique alors avec l'unité de contrôle 13 qui génère directement une image Im adaptée en fonction des paramètres évalués par la station de mesure 11.

Dans le mode de réalisation représenté en figure 3, l'unité de contrôle 13 est disposée dans la branche 35 (non représentée), et est directement reliée au module de communication 9. Ledit module de communication 9 est relié à la station de mesure 11 par exemple par liaison Bluetooth.

L'unité de contrôle 13 reçoit et interprète les données de mesure produites par la station de mesure 11. A partir de ces données, l'unité de contrôle 13 établit une image Im virtuelle, contenant par exemple des données à afficher issues de capteurs de la station de mesure 11.

L'unité de contrôle 13 peut aussi déterminer des valeurs des paramètres à afficher tels que la vitesse en nœuds ou kilomètres par heure de l'aéronef, la vitesse relative du vent, la force et la direction absolues du vent, la position (latitude et longitude), la date, l'heure, la pression atmosphérique, la température, l'humidité etc. Ces paramètres peuvent soit être directement collectés soit calculés ou évalués à partir d'autres grandeurs mesurées par les capteurs de la station de mesure 11.

L'unité de contrôle 13 peut aussi être configurée pour afficher des alertes, par exemple si la station de mesure 11 détecte des valeurs ou paramètres anormaux. En alternative, la station de mesure peut être connectée, par exemple par radio ou GSM, à un service d'alerte météorologique qui émet des bulletins d'alerte.

Selon un mode de réalisation alternatif, les lunettes 200 comportent un module de mesure, comportant en particulier au moins un des éléments suivants : un anémomètre, un baromètre, une station GPS, un altimètre, une boussole. Ce module de mesure est par exemple intégré au logement 4 contenant le générateur d'image 5, dans l'autre branche 35 et/ou dans la monture 31.

Les valeurs et caractères affichés restent à une position relativement fixe dans le champ de vision de l'utilisateur lorsqu'il incline la tête et/ou que l'aéronef tourne. Les valeurs affichées sont ainsi lisibles en toute circonstance.

En outre ou en alternative, le dispositif d'affichage 100 peut comporter une prise de courant, par exemple de type USB ou un chargeur inductif pour la recharge de batteries des différents éléments actifs (écran, unité de contrôle etc.). Une liaison filaire vers un boîtier extérieur contenant la station de mesure 11 et/ou une alimentation intégrée dans la branche 35 est aussi possible.

En particulier, le générateur d'images 5, ainsi qu'une batterie, le module de communication 9 et l'unité de contrôle 13 le cas échéant, peuvent se présenter sous forme de boîtier séparable de la branche 35. Ainsi, ce boîtier peut être détaché et rechargé, par exemple par insertion dans un socle, tandis que les lunettes 200 peuvent être utilisées séparément en tant que simples lunettes de vue ou solaires.

La figure 5 montre un mode de réalisation du réflecteur 7 et de son raccord au pont nasal 33 permettant un ajustement de sa position par rapport au cadre 3 et au générateur d'images 5.

Le réflecteur 7 de la figure 5 est porté par un bras ou une rotule 15, relié par une extrémité au pont nasal 33, et par l'autre extrémité au réflecteur 7. Le bras 15 peut être déformable, par exemple par inclusion d'un fil métallique, ou bien être articulé au pont nasal 33 et/ou au réflecteur 7 notamment au moyen de liaisons de type rotule.

La modification de la forme ou de l'inclinaison du bras 15 permet alors d'ajuster l'angle α entre le plan moyen P des verres 1a, 1b et l'axe optique A du réflecteur 7, et, dans une moindre mesure, la distance l entre le réflecteur 7 et le générateur d'images 5.

On peut alors ajuster l'angle α et/ou la distance l à la morphologie des lunettes 200 et de l'utilisateur, ainsi que la position finale de l'image virtuelle Im dans le champ de vision de l'utilisateur.

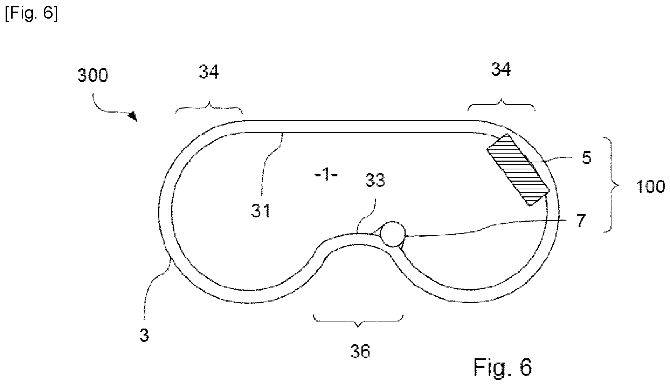

La figure 6 est une représentation schématique d'un dispositif optique sous forme de masque 300, par exemple de sports d'hiver ou de plongée, comportant un dispositif d'affichage 100 selon l'invention. Le masque 300 présente lui aussi un cadre support 3, entourant un verre 1 unique.

Le cadre support 3 comporte une monture 31, présentant une portion horizontale destinée à être portée au niveau du front de l'utilisateur, et un pont nasal 33 se trouvant au niveau de l'arête ou de la racine du nez de l'utilisateur lors de l'utilisation du masque 300, dans une portion centrale 36 du cadre support 3.

Le dispositif d'affichage 100 comporte un générateur d'images 5 disposé à une extrémité latérale de la monture 31 horizontale, au niveau de la tempe de l'utilisateur, et un réflecteur 7 disposé au niveau du pont nasal 33.

Si la monture 31 horizontale du masque 300 est courbée en vue de dessus (cas des masques 300 de sports d'hiver) pour suivre le tour de tête de l'utilisateur, le générateur d'images 5 peut être disposé contre le verre 1 du masque 300, au niveau de l'extrémité de la monture 31 horizontale.

Si la monture 31 horizontale est relativement droite (cas des masques 300 de plongée à verre 1 plan), le générateur d'images 5 est disposé en retrait par rapport au plan contenant le verre 1, par exemple d'une distance comprise entre 0 et 35mm. La fixation du générateur d'images 5 peut se faire par exemple par collage, clipsage, vissage à une languette ou projection dépassant du cadre support 3 vers l'arrière, de façon perpendiculaire au plan du verre 1.

Le dispositif d'affichage 100 selon l'invention est aisément intégrable dans un dispositif optique tel que des lunettes 200 ou bien un masque 300, et fournit des informations, des images et/ou des vidéos de façon dynamique.

Des lunettes 200 pourvues du dispositif d'affichage 100 sont en outre légères, compactes et ouvertes. Elles ne diminuent donc aucunement les sensations que procure le vol libre.

Le réflecteur 7 est en outre intégré dans la structure du pont 33, sans la présence d'un bras dépassant en face d'un œil de l'utilisateur U, ce qui représenterait une source de blessure potentielle en cas de collision ou de chute.

L'image obtenue se trouve en périphérie du champ de vision de l'utilisateur. Sa présence ne dénature donc pas les paysages et panoramas que l'utilisateur peut toujours admirer sans altération. Pour lire les informations véhiculées par l'image Im, l'utilisateur a simplement à tourner son regard vers le réflecteur 7 pour voir l'image Im. L'image Im est accessible sans geste des mains ou des doigts, ce qui permet à l'utilisateur d'utiliser ses mains pour autre chose, par exemple le pilotage d'un deltaplane ou d'un parapente dans des conditions de sécurité optimales.

En outre, le dispositif d'affichage 100 n'utilise pas de réflexion partielle sur les verres 1, 1a, 1b des lunettes 200 ou du masque 300, de sorte que ceux-ci peuvent être adaptés à la vision de l'utilisateur, être recouverts d'un revêtement fonctionnel autre que réflecteur (antireflet, polarisant etc.) voire être complètement absents. Le dispositif d'affichage 100 n'est pas non plus sujet à une perte de rendement énergétique du fait d'une réflexion partielle, la luminosité non-réfléchie représentant une perte énergétique potentiellement importante

Le dispositif optique se distingue donc par le fait de nécessiter peu de composants, ce qui permet un assemble facile et rapide. Il n'y a pas d'interaction par exemple avec le verre de la lunette ou du masque équipé de ce dispositif optique.

## Revendications

1. [Dispositif optique (200, 300) comportant un dispositif d'affichage (100) d'image ou de données, le dispositif optique (200, 300) comportant :

    - un cadre support (3) configuré pour permettre le port du dispositif optique (200, 300) sur la tête de l'utilisateur, ledit cadre support (3) comportant au moins une portion latérale (34), destinée à se trouver au niveau de la tempe d'un utilisateur lors du port du dispositif optique (200, 300), et une portion centrale (36), disposée de sorte à être au niveau du nez de l'utilisateur lors du port du dispositif optique (200, 300),

**caractérisé en ce qu'**il comporte :

    - un générateur d'images (5), porté par la portion latérale (34) du cadre support (3), configuré pour générer une image (Im),
    - un réflecteur (7), porté par le cadre support (3) ou une lentille ophtalmique portée par le cadre support (3), disposé et orienté pour réfléchir l'image (Im) générée par le générateur d'images (5) vers un œil de l'utilisateur (U) de façon à former une image virtuelle (Im),

2. Dispositif selon la revendication précédente, dans lequel le réflecteur (7) est porté par la portion centrale (36) du cadre support (3).

3. Dispositif selon la revendication précédente, dont la portion centrale (36) du cadre support (3) comporte un pont nasal (33), configuré pour être disposé sur l'arête ou la racine du nez de l'utilisateur, **caractérisé en ce que** le réflecteur (7) est un miroir concave porté par le pont nasal (33).

4. Dispositif selon la revendication 1, dans lequel le réflecteur (7) est fixé sur la lentille ophtalmique .

5. Dispositif selon l'une quelconque des revendications 1 à 4, **caractérisé en ce que** le réflecteur (7) est un miroir concave parabolique ou sphérique.

6. Dispositif selon l'une des revendications précédentes, **caractérisé en ce que** le générateur d'images (5) comporte au moins un des éléments suivants : un écran réflectif, un écran transflectif, un écran à cristaux liquides, un écran à cristaux liquides sur puce, une puce de traitement de la lumière, des diodes organiques.

7. Dispositif selon l'une des revendications précédentes, **caractérisé en ce que** le générateur d'images (5) et le réflecteur (7) sont configurés et disposés de sorte que l'image virtuelle (Im) générée apparaît à une distance supérieure à 2m.

8. Dispositif optique selon l'une quelconque des revendications précédentes, **caractérisées en ce qu'**il comporte en outre un module de communication (9), configuré pour communiquer avec une station de mesure (11), le dispositif d'affichage (100) étant configuré pour adapter l'image virtuelle (Im) à des données évaluées par la station de mesure (11).

9. Dispositif optique selon l'une des revendications précédentes, **caractérisées en ce que** le générateur d'image (5) est configuré pour afficher au moins une des données suivantes : la direction et/ou de la force du vent, l'altitude, la température, la vitesse absolue et/ou relative, des coordonnées de latitude et/ou de longitude, un message SMS.

10. Dispositif optique selon l'une des revendications précédentes, **caractérisé en ce qu'**il comporte un module de mesure, comportant au moins un des éléments suivants : un anémomètre, un baromètre, une station GPS, un altimètre, une boussole, un récepteur SMS.

11. Lunettes (200), en particulier de sport, formant un dispositif optique selon l'une quelconque des revendications 1 à 10 avec

- un cadre support (3) configuré pour permettre le port des lunettes (200) sur la tête de l'utilisateur, ledit cadre support (3) comportant au moins une portion latérale (34), destinée à se trouver au niveau de la tempe d'un utilisateur lors du port des lunettes (200), et une portion centrale (36), disposée de sorte à être au niveau du nez de l'utilisateur lors du port des lunettes (200),
- un générateur d'images (5), porté par la portion latérale (34) du cadre support (3), configuré pour générer une image (Im), un réflecteur (7) porté par le cadre support (3) ou une lunette ophtalmique, et disposé et orienté pour réfléchir l'image (Im) générée par le générateur d'images (5) vers un œil de l'utilisateur (U) de façon à former une image virtuelle (Im).

12. Dispositif optique selon la revendication précédente, **caractérisé en ce que** le générateur d'image (5) est disposé dans une branche (35) du cadre support (3).

13. Masque (300), en particulier de plongée ou de sport de glisse, formant un dispositif optique selon l'une quelconque des revendications 1 à 10 avec

- un cadre support (3) configuré pour permettre le port du masque (300) sur la tête de l'utilisateur, ledit cadre support (3) comportant au moins une portion latérale (34), destinée à se trouver au niveau de la tempe d'un utilisateur lors du port du masque (300),
- un générateur d'images (5), porté par la portion latérale (34) du cadre support (3), configuré pour générer une image (Im),
- un réflecteur (7), porté le cadre support (3) ou le verre du masque, disposé et orienté pour réfléchir l'image (Im) générée par le générateur d'images (5) vers un œil de l'utilisateur (U) de façon à former une image virtuelle (Im).

[Fig. 1]

Fig. 1

[Fig. 2]

Fig. 2

[Fig. 3]

46.31    N
6.5     E

*Im*

Fig. 3

[Fig. 4]

Fig. 4

[Fig. 5]

P

α

15

7

A

33

Fig. 5

EP 3 671 316 A1

[Fig. 6]

Fig. 6

14

Europäisches Patentamt
European Patent Office
Office européen des brevets

## RAPPORT DE RECHERCHE EUROPEENNE

Numéro de la demande

EP 19 21 8879

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2004/113867 A1 (TOMINE HIDEKI [US] ET AL) 17 juin 2004 (2004-06-17) * alinéas [0010], [0011], [0092], [0093], [0098] - [0100]; figures 27,33A-33C * | 1-3,5-13 | INV. G02B27/01 G02C5/12 B63C11/12 |
| X | US 9 759 932 B1 (AINSWORTH SEAN [US] ET AL) 12 septembre 2017 (2017-09-12) * colonne 1, ligne 42; figures 5, 10B * | 1-13 | |
| X,D | US 4 806 011 A (BETTINGER DAVID S [US]) 21 février 1989 (1989-02-21) * figures 1-3 * | 1-3,5-13 | |
| X | US 2003/184868 A1 (GEIST RICHARD EDWIN [US]) 2 octobre 2003 (2003-10-02) * figures 2,3 * | 1-13 | |
| X | US 6 474 808 B1 (BETTINGER DAVID S [US]) 5 novembre 2002 (2002-11-05) * figure 1 * | 1-3,5-13 | |
| X | US 2015/378161 A1 (BAILEY MATTHEW [CA] ET AL) 31 décembre 2015 (2015-12-31) * figure 1 * | 1,4,6-13 | DOMAINES TECHNIQUES RECHERCHES (IPC) G02B B63C G02C |
| X | WO 93/00134 A1 (HALES LYNN B [US]) 7 janvier 1993 (1993-01-07) * figure 12 * | 1,4,6-13 | |
| X,P | WO 2019/024992 A1 (HUAWEI TECH CO LTD [CN]; EROMAKI MARKO [FI]) 7 février 2019 (2019-02-07) * figure 1 * | 1-3,5,6, 11-13 | |
| A | WO 88/02494 A1 (INSIGHT INC [US]) 7 avril 1988 (1988-04-07) * abrégé; figure 4 * | 8-13 | |

Le présent rapport a été établi pour toutes les revendications

| Lieu de la recherche | Date d'achèvement de la recherche | Examinateur |
|---|---|---|
| Munich | 14 avril 2020 | Haan, Martine |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 21 8879

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-04-2020

| Document brevet cité au rapport de recherche | | Date de publication | Membre(s) de la famille de brevet(s) | | Date de publication |
|---|---|---|---|---|---|
| US 2004113867 | A1 | 17-06-2004 | AU | 2002362095 A1 | 17-06-2003 |
| | | | US | 2004113867 A1 | 17-06-2004 |
| | | | WO | 03048838 A1 | 12-06-2003 |
| US 9759932 | B1 | 12-09-2017 | US | 9759932 B1 | 12-09-2017 |
| | | | US | 2017351120 A1 | 07-12-2017 |
| | | | US | 2020033640 A1 | 30-01-2020 |
| US 4806011 | A | 21-02-1989 | AUCUN | | |
| US 2003184868 | A1 | 02-10-2003 | AUCUN | | |
| US 6474808 | B1 | 05-11-2002 | AUCUN | | |
| US 2015378161 | A1 | 31-12-2015 | US | 2015378161 A1 | 31-12-2015 |
| | | | US | 2015378162 A1 | 31-12-2015 |
| | | | US | 2015378164 A1 | 31-12-2015 |
| | | | US | 2017343796 A1 | 30-11-2017 |
| | | | US | 2017343797 A1 | 30-11-2017 |
| | | | US | 2018106996 A1 | 19-04-2018 |
| | | | US | 2018321484 A1 | 08-11-2018 |
| WO 9300134 | A1 | 07-01-1993 | AU | 2240392 A | 25-01-1993 |
| | | | US | 6360182 B1 | 19-03-2002 |
| | | | WO | 9300134 A1 | 07-01-1993 |
| WO 2019024992 | A1 | 07-02-2019 | CN | 110945409 A | 31-03-2020 |
| | | | EP | 3646111 A1 | 06-05-2020 |
| | | | WO | 2019024992 A1 | 07-02-2019 |
| WO 8802494 | A1 | 07-04-1988 | AU | 8103387 A | 21-04-1988 |
| | | | DE | 3789236 D1 | 07-04-1994 |
| | | | DE | 3789236 T2 | 09-06-1994 |
| | | | EP | 0326574 A1 | 09-08-1989 |
| | | | JP | H1167 U | 02-06-1999 |
| | | | JP | H02500216 A | 25-01-1990 |
| | | | US | 4757714 A | 19-07-1988 |
| | | | US | 5162828 A | 10-11-1992 |
| | | | WO | 8802494 A1 | 07-04-1988 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4806011 A